# FASCICULE DE BREVET EUROPEEN

(11) **EP 0 657 395 B1**
(45) Date de publication et mention de la délivrance du brevet: **12.05.1999**
(21) Numéro de dépôt: 94402760.6
(22) Date de dépôt: 02.12.1994
(51) Int. Cl.: C03C 25/02

(54) **Procédé de production de fils de verre ensimés et produits résultants**
Verfahren zur Herstellung von beschichteten Glasfasern und dadurch hergestellte Glasfasern
Process for the production of sized glass fibres and thus produced glass fibres

(30) Priorité: 09.12.1993 FR 9314792
(43) Date de publication de la demande: 14.06.1995
(73) Titulaire: VETROTEX FRANCE, 73000 Chambéry (FR)
(72) Inventeur: Moireau, Patrick, F-73190 Curienne (FR)
(74) Mandataire: Breton, Jean-Claude

(56) Documents cités:
- EP-A- 0 001 286
- EP-A- 0 243 275
- EP-A- 0 570 283
- US-A- 5 055 119
- PATENT ABSTRACTS OF JAPAN, vol. 14, no. 446 (C-763), 25 septembre 1990 & JP-A-02 175 634 (SUMITOMO ELECTRIC IND. LTD.) 6 Juillet 1990
- CHEMICAL ABSTRACTS, vol. 115, no. 8, 26 août 1991, Columbus, OH (US); p. 350, AN 77199x & CA-A-2 024 379 (DESOTO INC.) 2 Mars 1991
- CHEMICAL ABSTRACTS, vol. 101, no. 12, 17 septembre 1984, Columbus, OH (US); p. 331, no. 96444a & JP-A-5 950 053 (NIPPON VALQUA INDUSTRIES LTD.) 22 Mars 1984

## Description

La présente invention concerne un procédé de production et de traitement de fils de verre destinés notamment à renforcer des matières organiques, lesdits fils de verre étant revêtus d'un ensimage essentiellement organique et apte à polymériser sous l'action de la chaleur. La présente invention concerne également les fils de verre obtenus selon le procédé en question et les composites réalisés à partir desdits fils.

La fabrication directe de fils de verre se fait de façon connue à partir de filets de verre fondu s'écoulant des orifices d'une ou plusieurs filières. Ces filets sont étirés mécaniquement sous forme de filaments continus, puis les filaments sont rassemblés en un ou plusieurs fils de base, lesquels fils sont ensuite collectés sur des supports en mouvement ou subissent d'autres traitements avant collecte selon les applications recherchées.

Avant leur rassemblement sous forme de fils, les filaments sont revêtus d'un ensimage par passage sur un organe ensimeur alimenté en continu. Ce dépôt d'ensimage est nécessaire à l'obtention des fils et permet l'association des fils avec d'autres matières, telles que des matières organiques, pour réaliser des composites.

L'ensimage, en effet, joue en premier lieu un rôle de lubrifiant et permet de protéger les fils de l'abrasion résultant du frottement à grande vitesse des fils sur divers organes tels que les organes de guidage, lors du procédé précédemment cité.

L'ensimage assure également, dans la plupart des cas, I'intégrité des fils susmentionnés, c'est-à-dire la liaison des filaments qui les constituent entre eux. Cette intégrité est notamment recherchée dans les applications textiles où les fils sont soumis à de fortes contraintes mécaniques. En effet, si les filaments constituant les fils sont peu solidaires les uns des autres, ils se rompent plus facilement au cours de telles applications et viennent encrasser les machines textiles. De façon générale, I'intégrité des fils est recherchée, les fils non intègres étant considérés comme difficiles à manipuler, notamment à extraire d'enroulements, manuellement ou par l'intermédiaire de machines.

L'ensimage confère par ailleurs aux fils la possibilité d'être associés à différentes matières à renforcer en vue de la réalisation de pièces composites, en aidant à la création de liaisons entre les fils et les matières à renforcer et en facilitant le mouillage desdits fils par lesdites matières. Par mouillage des fils, on entend l'étalement de la matière à la surface du fil mais aussi sa pénétration au sein du fil composé de filaments. De la qualité de l'adhérence de la matière aux fils et de l'aptitude au mouillage des fils par la matière dépendent notamment les propriétés mécaniques des composites obtenus à partir de ladite matière et desdits fils. Les caractéristiques de mouillabilité sont cependant antagonistes avec les caractéristiques d'intégrité mentionnées plus haut. En effet, plus l'intégrité d'un fil est grande, plus la liaison des filaments entre eux est forte et plus la matière à renforcer pénètre difficilement au sein du fil. De fait, les compositions d'ensimage existantes résultent généralement d'un compromis entre l'aptitude à renforcer d'autres matières et l'intégrité recherchées au niveau des fils.

L'ensimage, pour être adapté aux procédés utilisés, doit notamment être stable et compatible avec les vitesses d'étirage des filaments devant le traverser. Cet ensimage ne doit pas être source de phénomènes de cisaillement trop importants dus aux vitesses élevées des filaments (étirés à la vitesse de plusieurs dizaines de mètres par seconde) et ne doit pas poser des problèmes de mouillage de la surface desdits filaments auxdites vitesses. Dans les procédés recourant à des étapes de traitement thermique de l'ensimage, il convient en outre d'utiliser des ensimages réagissant thermiquement et présentant une température de réaction suffisamment élevée pour demeurer stables sous filière.

Si le choix du procédé implique l'utilisation d'un ensimage répondant à certaines conditions, le choix de l'ensimage peut également influer sur le procédé.

Ainsi la plupart des ensimages utilisés actuellement sont des ensimages aqueux, faciles à mettre en oeuvre, mais comprenant de l'eau en quantité importante (90 % en poids de l'ensimage conduisant notamment à des enroulements présentant de 8 à 14 % en poids d'eau), ce qui oblige à prévoir une étape de séchage des fils avant toute utilisation desdits fils pour renforcer des matières organiques, l'eau pouvant nuire à la bonne adhérence entre lesdits fils et lesdites matières. Ces séchages sont longs et coûteux. Lorsqu'ils sont faits pendant l'opération de fibrage (c'est-à-dire avant collecte des fils obtenus après rassemblement des filaments), soit au niveau des filaments (WO 92/05122), soit au niveau des fils (US-A-3 853 605), ils nécessitent l'implantation de dispositifs de séchage sous chaque filière et lorsqu'ils sont faits sur des enroulements de fils, ils entraînent des risques de migration de l'ensimage au sein desdits enroulements. Ces migrations se font de manière plus ou moins sélective selon l'affinité des composants de l'ensimage pour le verre et conduisent à l'obtention de fils présentant des caractéristiques irrégulières sur leur longueur, les ensimages aqueux se répartissant de surcroît de façon irrégulière sur les fils dès le dépôt d'ensimage du fait de leur nature. A ces phénomènes de migration viennent s'ajouter, dans certains cas, des phénomènes de coloration des fils ou de déformation des enroulements. En outre, I'efficacité des séchages n'est pas toujours optimale, ces séchages devant être adaptés aux différentes conditions de fabrication et dépendant de la composition d'ensimage, de la masse des fils à sécher, etc...

Quelques rares brevets proposent des solutions pour réduire les problèmes de séchage et/ou de migration en recourant à des ensimages non aqueux mais les ensimages en question font généralement appel à des solvants organiques délicats à manipuler et pouvant nuire à la santé des personnes se trouvant alentour parce que toxiques, et/ou posent des problèmes de viscosité qu'il convient de résoudre en chauffant lesdits ensimages (US 4 604 325) ou en rajoutant des agents adéquats (US 4 609 591). L'utilisation de tels ensimages nécessite également l'implantation de dispositifs particuliers au-dessous de chaque filière dans de nombreux cas ; il est notamment nécessaire, lorsque les fils revêtus de ces ensimages sont collectés sous forme d'enroulement, de traiter lesdits fils avant obtention de l'enroulement fini afin d'éviter un collage trop important des fils entre eux, ce collage rendant le dévidage des fils difficile. Les traitements consistent, par exemple, à chauffer la nappe de filaments continus revêtus d'ensimage de manière à éliminer le solvant de l'ensimage avant rassemblement des filaments (US-A-3 425 862), ou à polymériser l'ensimage en soumettant le fil, sur au moins une partie de son trajet, à l'action de rayonnements ultraviolets (US-A-5 049 407). L'efficacité de ces traitements dépend, encore une fois, des conditions opératoires.

La présente invention a pour objet un procédé de production et de traitement de fils de verre ensimés dans lequel les fils sont produits par voie directe puis collectés, les fils ensimés ne nécessitant pas de traitement particulier, polymérisation comprise, ou l'utilisation de dispositifs supplémentaires de l'opération de dépôt d'ensimage à la collecte des fils ensimés, ces deux étapes étant comprises, et ne nécessitant pas non plus de traitement tel que le séchage, avant polymérisation.

La présente invention a également pour objet un procédé de production et de traitement de fils de verre ensimés, l'ensimage utilisé étant suffisamment stable, protégeant efficacement les fils de l'abrasion et conférant aux fils une meilleure aptitude au mouillage par des matières à renforcer, les fils ensimés étant en outre aisément manipulables, présentant des caractéristiques uniformes sur toute leur longueur et pouvant être avantageusement utilisés pour fabriquer des composites présentant des caractéristiques mécaniques améliorées.

L'objet de l'invention concerne également les fils obtenus selon le procédé de l'invention ainsi que les composites renforcés à l'aide de tels fils.

Les buts de l'invention sont atteints par un procédé de production et de traitement de fils de verre ensimés selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, ledit procédé consistant à déposer à la surface des filaments en cours d'étirage et avant rassemblement des filaments en fils un ensimage apte à polymériser thermiquement, ledit ensimage étant constitué d'une solution dont la teneur en solvant est inférieure à 5 % en poids et la viscosité inférieure ou égale à 400 cP, ladite solution comprenant une structure de base polymérisable et/ou réticulable thermiquement, ladite structure comprenant au moins 60 % en poids d'un ou plusieurs composants de masse moléculaire inférieure à 750 présentant au moins une fonction acrylique et/ou méthacrylique et/ou vinyléther et/ou N vinylamide et/ou N vinyllactame, la proportion de composant(s) polyfonctionnel(s) au sein desdits composants étant au moins égale à 45 % en poids desdits composants, de façon à obtenir des fils de verre revêtus d'un ensimage non polymérisé susceptible de polymériser thermiquement.

De préférence, les fils obtenus après rassemblement des filaments selon ce procédé sont collectés sous forme d'enroulement sur un support en rotation.

Par 〈〈 ensimage apte à polymériser thermiquement 〉〉, il faut entendre, selon l'invention, l'aptitude d'au moins une partie des composants de l'ensimage à subir une polymérisation et/ou une réticulation plus ou moins importantes, lors d'un traitement thermique.

Par 〈〈 fils de verre revêtus d'un ensimage non polymérisé 〉〉, il faut entendre les fils de verre revêtus de l'ensimage défini au paragraphe précédent, par opposition aux 〈〈 fils de verre revêtus de l'ensimage polymérisé 〉〉 obtenus après traitement thermique de polymérisation et/ou de réticulation.

Dans l'ensimage déposé selon l'invention, les solvants peuvent être des solvants organiques nécessaires à la mise en solution de certains composés polymérisables et/ou réticulables, ou de l'eau introduite la plupart du temps par le biais de constituants hydratés ou hydrolysés. La présence de ces solvants en quantité limitée ne requiert pas de traitements particuliers pour les éliminer; dans la majeure partie des cas, les ensimages selon l'invention sont, de surcroît, totalement dénués de solvant.

Du fait de sa faible viscosité, l'ensimage est compatible avec les conditions d'obtention des fils de verre imposées par le procédé direct, c'est-à-dire qu'il peut être utilisé de façon satisfaisante quelle que soit la vitesse d'étirage des filaments amenés à le traverser (plusieurs dizaines de mètres par seconde) et le diamètre desdits filaments (généralement compris entre 5 et 24 µm). L'ensimage selon l'invention présente également une vitesse de mouillage sur le fil compatible avec la vitesse d'étirage des fils.

Par 〈〈 structure de base 〉〉 (ou 〈〈 système de base 〉〉) selon l'invention, il faut comprendre les composés de l'ensimage ayant pour fonction essentielle de participer à la structure de l'ensimage. De préférence, la structure de base représente au moins 70 % en poids de l'ensimage selon l'invention et, de façon particulièrement préférée, elle représente entre 80 et 100 % en poids dudit ensimage.

De préférence et dans la plupart des cas selon l'invention, le ou les composants de masse moléculaire inférieure à 750 présents dans la structure de base de la composition d'ensimage selon l'invention et présentant au moins une des fonctions citées dans la définition de l'invention sont de masse moléculaire inférieure à 500. De même, dans la plupart des cas selon l'invention et de façon particulièrement préférée, ce ou ces composants sont des monomères (mono ou polyfonctionnels). La structure de base comprend au moins 60 % en poids des composants de masse moléculaire inférieure à 750 précités et, de préférence, elle comprend au moins 70 % en poids desdits composants.

De façon avantageuse, la structure de base comprend au moins 60 % en poids d'un mélange de composants de masse moléculaire inférieure à 750, un mélange desdits composants étant notamment plus réactif qu'un seul desdits composants. Chaque composant du mélange présente une (composant monofonctionnel) ou plusieurs fonctions identiques (composants polyfonctionnels) ou différentes choisies parmi celles citées dans la définition de l'invention, c'est-à-dire: acrylique, méthacrylique, vinyléther, N vinylamide et N vinyllactame. Comme indiqué dans la définition de l'invention, la proportion de composant(s) polyfonctionnel(s) au sein de l'ensemble formé par le ou les composants de masse moléculaire inférieure à 750 de la structure de base, est supérieure ou égale à 45 % en poids dudit ensemble et, de préférence, elle est supérieure ou égale à 50 % en poids dudit ensemble, de façon, notamment, à conférer une réactivité suffisante à la structure de base et lui permettre de former des réseaux bi- ou tridirectionnels lors de la polymérisation. Avantageusement, la proportion de composant(s) polyfonctionnel(s) au sein de la structure de base est également supérieure ou égale à 45 % et, de préférence, à 50 % en poids de ladite structure quelle que soit la masse moléculaire du ou desdits composants.

Les composants acryliques ou méthacryliques de masse moléculaire inférieure à 750 selon l'invention peuvent être des monomères de types acrylates ou méthacrylates aliphatiques, acrylates ou méthacrylates aromatiques, acrylates ou méthacrylates porteurs de substitutions halogénées (les halogènes en question pouvant être le fluor, le chlore, le brome) ou dérivés d'acrylates ou méthacrylates tels que des dérivés acrylamides ou méthacrylamides, etc...

A titre d'exemple, les monomères monofonctionnels acryliques ou méthacryliques selon l'invention peuvent être notamment des acrylates ou méthacrylates aliphatiques tels que des cyclohexyl-, n-hexyl, isodecyl-, stéaryl-, lauryl-, octyl-, isobornyl-, etc... acrylates ou méthacrylates, des acrylates ou méthacrylates aromatiques tels que des 2 phénoxy éthyl-, benzyl-, etc... acrylates ou méthacrylates, ou encore des alkyl-, tétrahydrofurfuryl-, 2 éthoxyéthyl-, 2 méthoxyéthyl-, 2 (2 éthoxy éthoxy) éthyl-, glycidyl-, 2 hydroxyéthyl carbamate d'isopropyl-, 2 hydroxyéthyl carbamate de n-butyl-, 2 hydroxyéthyl oxazolidone-, etc... acrylates ou méthacrylates, des fluoroalkyl acrylates ou des dérivés acrylamides ou méthacrylamides optionnellement substitués en N par des alkyls, des alkoxyalkyls, des hydroxyalkyls... tels que des N, N' diméthylacrylamides, des N isobutylacrylamides, des N méthylolacrylamides, des N méthoxyméthylacrylamides, des N butoxyméthylacrylamides, des diacétoneacrylamides, etc... ces monomères monofonctionnels servant notamment à conférer la fluidité requise à l'ensimage.

Les monomères polyfonctionnels acryliques ou méthacryliques selon l'invention peuvent notamment consister en des triéthylène glycol-, éthylène glycol-, tétraéthylène glycol-, polyéthylène glycol 200 à 600-, 1-3 butylène glycol-, 1-4 butanediol-, diéthylène glycol-, 1-6 hexanediol-, néopentyl glycol-, bisphénol A éthoxylé-, diéthylcarbonate-, etc... diacrylates ou diméthacrylates, en des diols diacrylates ou diméthacrylates à chaîne aliphatique C₁₄-C₁₅, alkoxylés ou non, en des tris (2-hydroxy éthyl isocyanurate)-, pentaérythrytol-, triméthylolpropane-, etc... triacrylates ou triméthacrylates, des pentaérythrytol-, ditriméthylolpropane-, etc... tétraacrylates ou tétraméthacrylates, des dipentaérythrytol-, etc... pentaacrylates ou pentaméthacrylates, des tétrabromobisphénol A diacrylates, des éthylène glycol bis (N méthylol acrylamide)...

Les monomères monofonctionnels vinyléthers selon l'invention peuvent consister en des butanediol monovinyléthers, des isobutylvinyléthers, des triéthylèneglycolmonovinyléthers, des octadecylvinyléthers, des hydroalkylvinyléthers, des uréthanealkylvinyléthers, des uréthanephénylvinyléthers, etc... et les monomères monofonctionnels N vinylamides et/ou N vinyllactames peuvent consister en des N vinyl 2 pyrrolidones, des N vinylcaprolactames, des N vinylpiperidones, des N vinyloxazolidones, des N méthyl N vinylformamides, des N vinylmorpholinones, des N vinyl-succinimides, des N vinylcarbazols, etc...

Les monomères polyfonctionnels vinyléthers, N vinylamides ou N vinyllactanes peuvent notamment consister en des triéthylène glycol divinyléthers, des diéthylène glycol divinyléther, des 1-4 cyclohexane diméthanol divinyléthers, etc...

En plus des monomères précédemment cités, la structure de base de l'ensimage peut comprendre d'autres composés polymérisables et/ou réticulables thermiquement tels que des polymères et/ou copolymères à fonctions partiellement polymérisées présentant des fonctions réactives similaires à celles des monomères utilisés, ces polymères et/ou copolymères présentant généralement une masse moléculaire supérieure à 750. Notamment, lorsque l'ensimage utilisé dans le procédé selon l'invention comprend des monomères acryliques ou méthacryliques, l'ensimage peut comprendre également des polymères et/ou copolymères à fonctions acryliques et/ou méthacryliques, lesdites fonctions étant partiellement polymérisées. Ces polymères ou copolymères peuvent être notamment des résines acrylates ou méthacrylates sur base identique à celle des monomères utilisés telle qu'une base uréthane aliphatique et/ou aromatique, une base époxy aliphatique et/ou aromatique, une base aliphatique et/ou aromatique, une base silicone, une base esters d'acides gras ou polyesters, une base silicone uréthane, etc..., les résines utilisées présentant éventuellement des substitutions halogénées. Les polymères et/ou copolymères employés peuvent de la même façon présenter des fonctions vinyléthers et/ou N vinylamides et/ou N vinyllactames, lesdites fonctions étant partiellement polymérisées. Selon un mode de réalisation de l'invention, la structure de base comprend ainsi au moins un composant de masse moléculaire supérieure à 750, ce composant se présentant, par exemple, sous la forme d'un polymère ou copolymère tel que précédemment mentionné présentant au moins une fonction acrylique et/ou méthacrylique et/ou vinyléther et/ou N vinylamide et/ou N vinyllactame.

Il convient de noter que lorsque l'ensimage utilisé dans le procédé selon l'invention est déposé sur les filaments en cours d'étirage, il se répartit très rapidement sur toute leur surface et forme un véritable film de protection pour chacun d'entre eux. Le fil obtenu selon le procédé de l'invention est ainsi constitué d'un faisceau de filaments qui peuvent glisser les uns sur les autres, ce qui favorise son imprégnation par toute matière à renforcer. Cependant, du fait du choix des composés de l'ensimage, de leurs proportions respectives et de la faible viscosité de l'ensemble, aucun des constituants présents ne joue un rôle de collage permettant de conférer une certaine intégrité aux fils ensimés obtenus. Le fil ne présente par conséquent pas une intégrité au sens ordinaire du terme, c'est-à-dire qu'il n'est pas constitué de filaments fixés entre eux grâce à une liaison par collage provoquée par un ou plusieurs constituants de l'ensimage telle que peuvent la provoquer des agents filmogènes présents en quantité importante dans un ensimage.

Malgré cela, il est observé que les fils obtenus selon l'invention sont aisément manipulables et lorsqu'ils sont bobinés sous forme d'enroulements, peuvent facilement être extraits desdits enroulements sans avoir subi au préalable de traitement de polymérisation (et/ou de réticulation) de l'ensimage. Les fils obtenus ont par ailleurs une meilleure aptitude au mouillage par des matières à renforcer ainsi qu'expliqué précédemment.

Si l'ensimage selon l'invention se caractérise par l'absence d'agents de collage, comme des agents filmogènes lorsqu'ils sont en quantité importante, il peut comprendre néanmoins, à titre d'additif(s) à la structure de base, au moins un agent filmogène dans des proportions n'excédant pas 10 % en poids. Ces proportions sont insuffisantes pour conférer une quelconque intégrité au fil mais permettent de faciliter le fibrage dans le procédé selon l'invention pour certaines vitesses d'étirage des filaments et certains diamètres desdits filaments. La présence d'agents filmogènes empêche notamment un frottement trop important des filaments sur le dispositif de dépôt d'ensimage lorsque les filaments sont très fins et étirés à grande vitesse. Les agents filmogènes selon l'invention peuvent être polymérisables et/ou réticulables thermiquement et consistent préférentiellement en des dérivés des silicones et/ou des siloxanes tels que les silicone acrylates, les α-ω-hydroxypolydiméthyl siloxanes, les α-ω-aminopolydiméthyl siloxanes, les α-ω-acryloxypolydiméthyl siloxanes, etc...

Il est utile de préciser que les additifs pouvant être incorporés dans l'ensimage remplissent des fonctions bien particulières et ne participent pas de manière essentielle à la structure de l'ensimage, contrairement à la structure de base. Même si ces additifs sont à distinguer de la structure de base, ils peuvent être néanmoins polymérisables et/ou réticulables thermiquement comme les composés de la structure de base.

L'ensimage selon l'invention peut également comprendre, à titre d'additif(s), au moins un agent de couplage, la proportion d'agent(s) de couplage au sein de l'ensimage n'excédant pas 15 % en poids. Les agents de couplage pouvant être utilisés sont le plus souvent non polymérisables par voie radicalaire et peuvent consister en des organosilanes qui, de préférence, présentent un poids moléculaire inférieur à 500. A titre d'exemples d'agents de couplage organosilanes, on peut citer notamment des gamma-aminopropyltriéthoxysilanes, des méthyl triméthoxysilanes, des gamma-glycidoxypropyltriméthoxysilanes, des N β-(aminoéthyl)-gamma-aminopropyltriméthoxysilanes, des gamma-isocyanatopropyl triéthoxysilanes, des 3-méthoxy-5-hydroxy-phényl-alkyl triméthoxysilanes, etc... Les agents de couplage utilisables dans l'invention peuvent également consister en des titanates ou des zirconates, ou encore en des siloxanes.

L'ensimage selon l'invention peut aussi comprendre, à titre d'additif(s), au moins un agent dit 〈〈 textile 〉〉 jouant essentiellement un rôle de lubrifiant, notamment pour certaines applications textiles, la proportion d'agent(s) textile(s) n'excédant pas 8 % en poids. Les agents textiles pouvant être utilisés sont préférentiellement des esters gras ou des esters de glycol tels que des palmitates d'isopropyle, des palmitates de cétyle, des stéarates d'isobutyle, des laurates de décyle, des adipates d'éthylèneglycol, etc... L'ensimage peut également comprendre, à titre d'additif(s), au moins un agent d'adaptation aux matières à renforcer, dans le cas des matières cimentaires notamment.

Selon la destination du fil obtenu selon l'invention, l'ensimage utilisé comprend également, à titre d'additif(s), un ou plusieurs amorceurs de polymérisation, dont au moins un peroxyde organique et, éventuellement, un ou plusieurs catalyseurs tels que des dérivés de cobalt. Dans de nombreux cas, le ou les peroxydes organiques seront présents dans l'ensimage et cela dans des proportions variant entre 0,5 et 4 % en poids. Notamment, ce ou ces peroxydes seront présents dans l'ensimage dans les cas où la polymérisation de l'ensimage s'effectuera directement après collecte des fils ensimés et sans imprégnation préalable desdits fils par d'autres matières telles que des matières à renforcer (par exemple dans le cas où les fils sont destinés à des applications textiles).

Les peroxydes selon l'invention peuvent notamment consister en des peroxydes de méthyléthylcétone, des peroxydes de cyclohexanone, des peroxydes d'acétylacétone, des peroxydes de dibenzoyle, des bis (4-tertiobutyl-cyclo-hexyl)-peroxydicarbonates, des peroxy-2-éthylhexanoates de ter-butyle, des peroxy 3-3-5 triméthylhexanoates de ter-butyle, des peroxybenzoates de ter-butyle, des ter-butylperoxyisopropylcarbonates, des 1-1 bis (tertio-butyl-peroxy)-cyclohexanes, des 1-1 bis (tertiobutylperoxy)-3-3-5-triméthylcyclohexanes, des peroxydes de di-tertiobutyle, des bis (ter-butyle peroxy isopropyl) benzènes, des peroxydes de dicumyle, des hydroperoxydes de ter-butyle, etc... Ces peroxydes présentent préférentiellement une température de décomposition supérieure à 60°C.

Le ou les peroxydes souvent très réactifs peuvent également être accompagnés d'un ou plusieurs agents stabilisants qui jouent le rôle de retardateurs de polymérisation pour empêcher notamment des débuts de polymérisation de l'ensimage avant dépôt dudit ensimage sur les fils et/ou collecte des fils ensimés. L'ensimage dans ce cas comprendra au plus 3 % en poids d'agent(s) stabilisant(s), ces agents pouvant être notamment des phtalates, des paratertiobutylcatéchols, des 2-6-ditertio-butylparacresols, etc... De préférence, cependant, l'emploi d'agents stabilisants sera évité en refroidissant notamment les fils et/ou les systèmes de dépôt d'ensimage sur les fils pour éviter un échauffement de l'ensimage du fait de la proximité de la filière, cet échauffement risquant de provoquer un début de polymérisation de l'ensimage.

Les fils ensimés obtenus selon le procédé de l'invention peuvent être utilisés dans de nombreuses applications nécessitant ou non la polymérisation (et/ou réticulation) de l'ensimage recouvrant les fils directement après collecte et avant utilisation de ceux-ci à ces applications. Notamment, lorsque les fils sont destinés à être soumis à de fortes contraintes mécaniques lors de leur mise en oeuvre, par exemple dans des applications textiles, il est préférable, préalablement à leur mise en oeuvre, de faire polymériser l'ensimage qui les revêt, en soumettant les fils obtenus, se présentant généralement sous forme d'enroulements, à un traitement thermique indépendamment de l'opération de fibrage. La polymérisation permet alors de conférer au fil une intégrité au sens ordinaire du terme suffisante pour supporter de telles contraintes. Dans ce cas, l'ensimage utilisé dans le procédé selon l'invention comprend préférentiellement le ou les amorceurs de polymérisation susmentionnés. Dans ce cas également, si les fils obtenus selon le procédé de l'invention sont collectés sous forme d'enroulements, la quantité d'ensimage déposée sur les filaments est telle que lesdits fils comprennent moins de 5 % en poids d'ensimage. En effet, au-delà de cette limite supérieure, un collage trop important des spires de fils entre elles au sein des enroulements peut se produire lors de la polymérisation, ce collage rendant les fils inutilisables. De plus, au niveau des enroulements de fils de verre ensimés obtenus selon l'invention et soumis à un traitement thermique avant débobinage desdits fils, il est nécessaire que les spires de fil constituant de tels enroulements présentent un angle de croisure au moins égal à 1,5°. Par angle de croisure, il faut entendre l'angle qui existe entre les spires de fil appartenant à deux couches consécutives, et dont la bissectrice est contenue dans un plan perpendiculaire à l'axe de l'enroulement.

En effet, lors de la phase initiale de ce traitement, I'élévation de température provoque une diminution temporaire de la viscosité de l'ensimage avant que les réactions de polymérisation (et/ou de réticulation) n'interviennent. Si la croisure de l'enroulement est nulle ou faible, les spires de fil de deux couches consécutives de l'enroulement sont accolées ou tout au moins en contact sur une grande partie de leur longueur et l'ensimage a tendance à relier lesdites spires. A l'issue du traitement thermique, les zones de collage entre les spires de fil de couches consécutives sont importantes et l'enroulement est inutilisable. Lorsque l'angle de croisure du fil est d'au moins 1,5°, les zones de collage sont considérablement réduites et n'empêchent pas l'extraction du fil.

Les fils ensimés selon l'invention ayant subi ou non un traitement thermique, peuvent être également utilisés dans d'autres applications que les applications textiles. La principale application de tels fils reste le renforcement de différentes matières en vue de réaliser des composites. Ces matières peuvent être minérales (cimentaires) mais sont dans la plupart des cas organiques. Les fils de verre revêtus d'ensimage non polymérisé ou polymérisé par traitement thermique obtenus selon l'invention peuvent être associés à différentes matières organiques avant traitement de l'ensemble pour obtenir, soit des produits intermédiaires permettant la réalisation des composites, tels que des préimprégnés, soit directement des composites.

Dans le cas où l'on utilise un fil revêtu d'un ensimage non polymérisé selon l'invention, notamment un fil extrait d'un enroulement obtenu selon le procédé de l'invention, il est possible d'associer directement ledit fil à une matière organique sans polymérisation préalable de l'ensimage et d'effectuer une polymérisation ou une réticulation (ou gélification) de l'ensemble en soumettant ledit ensemble à un traitement thermique, la réaction étant initiée, au moins en partie, par au moins un amorceur et/ou un catalyseur de polymérisation thermique se trouvant dans la matière organique. Dans le cas où l'ensimage selon l'invention contient également un ou des amorceurs de polymérisation dont au moins un peroxyde organique, ces amorceurs peuvent également intervenir dans l'initiation de la réaction. L'amorceur et/ou le catalyseur de polymérisation thermique présent dans la matrice ne comprend pas obligatoirement, pour sa part, de peroxyde organique.

Dans le cas où l'on utilise des fils revêtus d'un ensimage polymérisé selon l'invention, l'association des fils et de la matière organique à renforcer en vue de réaliser un composite se fait de façon connue, l'ensemble étant subséquemment soumis à un traitement adéquat (éventuellement autre qu'un traitement thermique) afin de durcir la matière renforcée.

Le procédé selon l'invention permet ainsi d'obtenir des fils revêtus d'un ensimage non polymérisé, ou polymérisé par traitement thermique séparé de l'opération de fibrage, les fils ensimés présentant dans ce cas une perte au feu inférieure à 5 %, lesdits fils étant constitués de filaments uniformément enduits dudit ensimage et pouvant être imprégnés aisément de matière organique. Ces fils sont particulièrement appropriés à la réalisation de composites auxquels ils confèrent, dans la plupart des cas, des propriétés mécaniques améliorées.

Les exemples suivants permettent de mieux comprendre l'invention et de mieux apprécier ses avantages, ces exemples étant donnés à titre illustratif et non limitatif. Les fils de verre décrits ci-après sont formés par étirage mécanique de filets de verre fondu s'écoulant des orifices d'une filière sous la forme de filaments de 14 µm de diamètre. Le verre utilisé est un alumino-boro-silicate pratiquement dénué d'oxydes alcalins connu sous le nom de verre E. Les filaments de verre sont revêtus d'un ensimage conforme à l'invention par l'intermédiaire d'un rouleau ensimeur de 40 mm de diamètre tournant à 110 tours/min. Les filaments sont ensuite rassemblés sous forme de fils que l'on bobine sur des supports en rotation de façon à obtenir des enroulements présentant un angle de croisure moyen compris entre 10 et 16° environ.

### EXEMPLE 1

Les filaments, dans cet exemple, sont revêtus de la composition d'ensimage suivante exprimée en pourcentages pondéraux :

| Structure de base : | |
|---|---|
| Composants de masse moléculaire inférieure à 750 - Monomères : | |
| • 2 (2-éthoxy éthoxy) éthylacrylate ⁽¹⁾ | 21 % |
| • triéthylène glycol divinyl éther ⁽²⁾ | 23 % |
| • triméthylolpropanetriacrylate éthoxylé ⁽³⁾ | 20 % |
| Composant de masse moléculaire supérieure à 750 : | |
| • résine acrylate sur base époxy aromatique ⁽⁴⁾ | 20 % |

| Amorceur de polymérisation : | |
|---|---|
| • peroxybenzoate de terbutyle ⁽⁵⁾ | 2 % |

| Additifs : | |
|---|---|
| • agent de couplage gamma-aminopropyltriéthoxysilane ⁽⁶⁾ | 10 % |
| • agent textile palmitate d'isopropyle | 4 % |

L'ensimage en question présente une viscosité de 40 cP à 37°C. Les fils revêtus d'ensimage sont bobinés pendant 1200 s sous forme de stratifils présentant une masse approximative de 7 kg, puis les stratifils sont soumis à un traitement thermique à 130°C pendant 180 min.

Les fils sont ensuite extraits des enroulements pour mesurer leur résistance à l'abrasion. Ces fils présentent un titre de 330 tex, leur perte au feu s'élevant à 0,75 %. La résistance à l'abrasion des fils extraits des enroulements est évaluée en pesant la quantité de bourre formée après passage desdits fils sur une série de tiges. Pour différents fils revêtus de l'ensimage polymérisé précédemment décrit, la quantité de bourre pesée à l'issue du test et exprimée en milligrammes de bourre par kilogramme de fil testé a varié entre 8 et 50 mg/kg.

A titre de comparaison, des fils revêtus d'un ensimage aqueux à base d'une émulsion de résine époxy, de silanes et de tensioactifs cationiques, ces fils étant séchés selon des méthodes ordinaires peuvent former 200 voire 500 mg de bourre par kg de fil.

Par ailleurs, les fils revêtus de l'ensimage polymérisé selon cet exemple présentent de très bonnes qualités textiles.

### EXEMPLE 2

Les filaments, dans cet exemple, sont revêtus de la composition d'ensimage suivante exprimée en pourcentages pondéraux :

| Structure de base : | |
|---|---|
| Composants de masse moléculaire inférieure à 750 - Monomères : | |
| • 2 (2-éthoxy éthoxy) éthylacrylate ⁽¹⁾ | 23,5 % |
| • triéthylène glycol divinyl éther ⁽²⁾ | 27 % |
| • ester triacrylate ⁽⁷⁾ | 26 % |
| Composant de masse moléculaire supérieure à 750 : | |
| • oligomère uréthane acrylate aliphatique ⁽⁸⁾ | 7,5 % |

| Amorceur de polymérisation : | |
|---|---|
| • peroxybenzoate de terbutyle ⁽⁵⁾ | 2 % |

| Additifs : | |
|---|---|
| • agent de couplage gamma-aminopropyltriéthoxysilane ⁽⁶⁾ | 10 % |
| • agent textile palmitate d'isopropyle | 4 % |

Les fils obtenus sont bobinés pendant 3600 s sous forme de stratifils présentant une masse approximative de 20 kg, puis les stratifils sont soumis à un traitement thermique à 130°C pendant 180 min. Les fils extraits du stratifil présentent un titre de 474 tex et une perte au feu de 0,97 %. Après traitement thermique de ces enroulements, on constate qu'il n'y a eu aucune migration de l'ensimage.

### EXEMPLE 3

Les filaments, dans cet exemple, sont revêtus de la composition d'ensimage suivante exprimée en pourcentages pondéraux :

| Structure de base : | |
|---|---|
| Composants de masse moléculaire inférieure à 750 - Monomères : | |
| • 2 (2-éthoxy éthoxy) éthylacrylate ⁽¹⁾ | 21 % |
| • triéthylène glycol divinyl éther ⁽²⁾ | 23 % |
| • ester triacrylate ⁽⁷⁾ | 20 % |
| Composant de masse moléculaire supérieure à 750 : | |
| • oligomère uréthane acrylate aliphatique ⁽⁸⁾ | 20 % |

| Amorceur de polymérisation : | |
|---|---|
| • peroxybenzoate de terbutyle ⁽⁵⁾ | 2 % |

| Additifs : | |
|---|---|
| • agent de couplage gamma-aminopropyltriéthoxysilane ⁽⁶⁾ | 10 % |
| • agent textile palmitate d'isopropyle | 4 % |

Les fils obtenus sont bobinés pendant 3600 s sous forme de stratifils présentant une masse approximative de 20 kg, puis les stratifils sont soumis à un traitement thermique à 130°C pendant 180 min. Les fils extraits du stratifil présentent un titre de 335 tex et une perte au feu de 0,86 %. Après traitement thermique de ces enroulements, on constate qu'il n'y a eu aucune migration de l'ensimage.

### EXEMPLE 4

Les filaments, dans cet exemple, sont revêtus de la composition d'ensimage suivante exprimée en pourcentages pondéraux :

| Structure de base : | |
|---|---|
| Composants de masse moléculaire inférieure à 750 - Monomères : | |
| • 2 (2-éthoxy éthoxy) éthylacrylate ⁽¹⁾ | 25 % |
| • triéthyléne glycol divinyl éther ⁽²⁾ | 29 % |
| • ester triacrylate ⁽⁷⁾ | 29 % |

| Amorceur de polymérisation : | |
|---|---|
| • peroxybenzoate de terbutyle ⁽⁵⁾ | 3 % |

| Additifs : | |
|---|---|
| • agent de couplage gamma-aminopropyltriéthoxysilane ⁽⁶⁾ | 10 % |
| • agent textile palmitate d'isopropyle | 4 % |

L'ensimage en question présente une viscosité de 24 cP à 25°C. Les fils revêtus d'ensimage sont bobinés pendant 1200 s sous forme de stratifils présentant une masse approximative de 7 kg, puis les stratifils sont soumis à un traitement thermique à 130°C pendant 180 min. Les fils extraits des enroulements et revêtus de l'ensimage polymérisé présentent un titre de 342 tex, leur perte au feu s'élevant à 0,70 %.

### EXEMPLE 5

Les filaments, dans cet exemple, sont revêtus de la composition d'ensimage suivante exprimée en pourcentages pondéraux :

| Structure de base : | |
|---|---|
| Composants de masse moléculaire inférieure à 750 - Monomères : | |
| • 2 (2-éthoxy éthoxy) éthylacrylate ⁽¹⁾ | 22 % |
| • triéthylène glycol divinyl éther ⁽²⁾ | 24 % |
| • triméthylolpropanetriacrylate éthoxylé ⁽³⁾ | 20 % |
| Composant de masse moléculaire supérieure à 750 : | |
| • résine acrylate sur base époxy aromatique ⁽⁴⁾ | 20 % |

| Additifs : | |
|---|---|
| • agent de couplage gamma-aminopropyltriéthoxysilane ⁽⁶⁾ | 10 % |
| • agent textile palmitate d'isopropyle | 4 % |

L'ensimage en question présente une viscosité de 50 cP à 25°C. Les fils revêtus de l'ensimage non polymérisé présentent un titre de 321 tex et une perte au feu de 0,80 %.

### EXEMPLE 6

Les filaments, dans cet exemple, sont revêtus de la composition d'ensimage suivante exprimée en pourcentages pondéraux :

| Structure de base : | |
|---|---|
| Composants de masse moléculaire inférieure à 750 - Monomères : | |
| • lauryl acrylate ⁽⁹⁾ | 24 % |
| • ester diacrylate alkoxy aliphatique ⁽¹⁰⁾ | 21 % |
| • triméthylolpropanetriacrylate triéthoxylé ⁽³⁾ | 23 % |
| • bisphénol A acrylé époxydé ⁽¹¹⁾ | 20 % |

| Amorceur de polymérisation : | |
|---|---|
| • di-terbutyl peroxydé ⁽¹²⁾ | 2 % |

| Additif : | |
|---|---|
| • agent de couplage gamma-glycidoxypropyltriméthoxysilane ⁽¹³⁾ | 10 % |

L'ensimage en question présente une viscosité de 48 cP. Les fils ensimés sont bobinés sous forme de stratifils présentant une masse approximative de 13 kg, puis les stratifils sont soumis à un traitement thermique à 130°C pendant 5 heures suivi d'un traitement thermique à 140°C pendant 4 heures. Les fils extraits des enroulements et revêtus de l'ensimage polymérisé présentent un titre de 332 tex, leur perte au feu s'élevant à 0,74 % en poids.

La résistance à l'abrasion des fils est évaluée comme dans l'exemple 1. La quantité de bourre pesée à l'issue du test est de l'ordre de 57 mg de bourre par kg de fil.

### EXEMPLE 7

Les filaments, dans cet exemple, sont revêtus de la composition d'ensimage suivante exprimée en pourcentages pondéraux :

| Structure de base : | |
|---|---|
| Composants de masse moléculaire inférieure à 750 - Monomères : | |
| • tripropylène glycol diacrylate ⁽¹⁴⁾ | 25 % |
| • néopentyl glycol diacrylate dipropoxylé ⁽¹⁵⁾ | 21 % |
| • triméthylolpropanetriacrylate triéthoxylé ⁽³⁾ | 23 % |
| Composant de masse moléculaire supérieure à 750 : | |
| • résine époxy acrylate sur bisphénol A ⁽¹⁶⁾ | 13 % |

| Amorceur de polymérisation : | |
|---|---|
| • peroxyde de terbutyle et de cumyle ⁽¹⁷⁾ | 2 % |

| Additifs : | |
|---|---|
| • agent de couplage gamma-glycidoxypropyltriméthoxysilane ⁽¹³⁾ | 10 % |
| • agent textile palmitate d'isopropyle | 6 % |

L'ensimage en question présente une viscosité de 60 cP. Les fils ensimés sont bobinés sous forme de stratifils présentant une masse approximative de 13 kg, puis les stratifils sont soumis à un traitement thermique à 140°C pendant 8 heures. Les fils extraits des enroulements et revêtus de l'ensimage polymérisé présentent un titre de 325 tex, leur perte au feu s'élevant à 0,66 % en poids.

### EXEMPLE 8

Les filaments, dans cet exemple, sont revêtus de la composition d'ensimage suivante exprimée en pourcentages pondéraux :

| Structure de base : | |
|---|---|
| Composants de masse moléculaire inférieure à 750 - Monomères : | |
| • néopentyl glycol diacrylate dipropoxylé ⁽¹⁵⁾ | 31 % |
| • tripropylène glycol diacrylate ⁽¹⁴⁾ | 32 % |
| Composant de masse moléculaire supérieure à 750 : | |
| • oligomère acrylate de polyuréthane aromatique ⁽¹⁸⁾ | 25 % |

| Amorceur de polymérisation : | |
|---|---|
| • peroxyde de terbutyle et de cumyle ⁽¹⁷⁾ | 2 % |

| Additif : | |
|---|---|
| • agent de couplage gamma-glycidoxypropyltriméthoxysilane ⁽¹³⁾ | 10 % |

L'ensimage en question présente une viscosité de 78 cP. Les fils ensimés sont bobinés sous forme de stratifils présentant une masse approximative de 13 kg, puis les stratifils sont soumis à un traitement thermique à 160°C pendant 8 heures. Les fils extraits des enroulements et revêtus de l'ensimage polymérisé présentent un titre de 320 tex, leur perte au feu s'élevant à 0,54 % en poids.

La résistance à l'abrasion des fils est évaluée comme dans l'exemple 1. La quantité de bourre pesée à l'issue du test est de l'ordre de 41 mg de bourre par kg de fil.

### EXEMPLE 9

Les filaments, dans cet exemple, sont revêtus de la composition d'ensimage suivante exprimée en pourcentages pondéraux :

| Structure de base : | |
|---|---|
| Composants de masse moléculaire inférieure à 750 - Monomères : | |
| • ester triacrylate ⁽⁷⁾ | 28 % |
| • 2 (2-éthoxy éthoxy) éthylacrylate ⁽¹⁾ | 30 % |
| • hexanediol diacrylate ⁽¹⁹⁾ | 25 % |

| Additifs : | |
|---|---|
| • agent de couplage gamma- glycidoxypropyltriméthoxysilane ⁽¹³⁾ | 12 % |
| • agent textile palmitate d'isopropyle | 5 % |

Les fils ensimés ne sont pas soumis à un traitement thermique de polymérisation.

### EXEMPLE COMPARATIF

Les caractéristiques mécaniques des composites obtenus à l'aide des fils revêtus d'ensimages polymérisés selon les exemples 1 et 4 ou obtenus à l'aide de fils revêtus d'ensimage non polymérisé selon l'exemple 5 sont comparées aux caractéristiques mécaniques des composites réalisés à l'aide de fils de référence revêtus d'un ensimage aqueux à base d'une émulsion de résine époxy, de silanes et de tensioactifs cationiques.

Pour mesurer ces caractéristiques, des plaques à fils parallèles sont réalisées respectivement à partir des différents fils, conformément à la norme NF 57152. La résine utilisée est la résine époxy CY 205 commercialisée sous cette référence par la société CIBA-GEIGY, à laquelle on ajoute 21,5 % en poids d'un durcisseur aminé servant d'agent de copolymérisation, également commercialisé par la société CIBA-GEIGY sous la référence HT 972.

Les propriétés mécaniques présentées par ces plaques, en flexion et en cisaillement, sont mesurées respectivement selon les normes ISO 178 et ISO 4585. Ces propriétés sont mesurées avant vieillissement et après immersion de ces plaques dans l'eau à 98°C pendant 72 h.

Les résultats obtenus sur 8 à 10 éprouvettes pour chaque type de fil, rapportés à des plaques présentant des taux de verre en poids identiques, sont les suivants :

| | Ex. 1 | Ex. 4 | Ex. 5 | Référence |
|---|---|---|---|---|
| Contrainte de rupture en flexion (MPa) | | | | |
| • avant vieillissement | 2376 | 2369 | 2488 | 2280 |
| σ | (75) | (50) | (47) | (40) |
| • après vieillissement | 1563 | 1635 | 1637 | 1400 |
| σ | (73) | (24) | (27) | (20) |

| Contrainte de rupture en cisaillement (MPa) | | | | |
|---|---|---|---|---|
| • avant vieillissement | 64,0 | 67,2 | 74,5 | 69,5 |
| σ | (1,4) | (0,8) | (1,0) | (1,0) |
| • après vieillissement | 32,2 | 43,3 | 50,4 | 40,0 |
| σ | (1,0) | (1,2) | (1,1) | (0,4) |

Les chiffres entre parenthèses indiquent les écarts-types pour chaque série de mesures.

Ces résultats montrent que des pièces composites réalisées à partir des fils obtenus selon l'invention présentent des propriétés aussi bonnes et pour au moins une de ces propriétés meilleures que celles des pièces fabriquées à partir des fils classiques. Les résultats obtenus dans le cas des pièces réalisées à partir des fils revêtus d'ensimage non polymérisé selon l'exemple 5 sont particulièrement bons, les composites obtenus présentant des propriétés mécaniques meilleures que celles des composites réalisés à partir de fils classiques à la fois en flexion et en cisaillement.

Les fils réalisés selon l'invention peuvent ainsi être utilisés avantageusement dans de nombreux types d'applications, qu'il s'agisse d'applications textiles ou du renforcement de matrices minérales (grilles de renfort du bitume par exemple) ou organiques.

### Références :

- (1): Commercialisé sous la référence 〈〈 SR 256 〉〉 par la société CRAY-VALLEY
- (2): Commercialisé sous la référence 〈〈 DVE 3 〉〉 par la société INTERNATIONAL SPECIALITY PRODUCTS
- (3): Commercialisé sous la référence 〈〈 SR 454 〉〉 par la société CRAY-VALLEY
- (4): Commercialisée sous la référence 〈〈 Photomer 3016 〉〉 par la société AKCROS
- (5): Commercialisé sous la référence 〈〈 Trigonox C 〉〉 par la société AKZO
- (6): Commercialisé sous la référence 〈〈 A 1100 〉〉 par la société UNION CARBIDE
- (7): Commercialisé sous la référence 〈〈 Photomer 4171 〉〉 par la société AKCROS
- (8): Commercialisé sous la référence 〈〈 Actilane 27 〉〉 par la société AKCROS
- (9): Commercialisé sous la référence 〈〈 SR 335 〉〉 par la société CRAY-VALLEY
- (10): Commercialisé sous la référence 〈〈 SR 9209 〉〉 par la société CRAY-VALLEY
- (11): Commercialisé sous la référence 〈〈 Ebécryl 3605 〉〉 par la société UNION CHIMIQUE BELGE
- (12): Commercialisé sous la référence 〈〈 Trigonox B 〉〉 par la société AKZO
- (13): Commercialisé sous la référence 〈〈 Silane A 187 〉〉 par la société OSI SPECIALITICS S.A.
- (14): Commercialisé sous la référence 〈〈 TPGDA 〉〉 par la société UNION CHIMIQUE BELGE
- (15): Commercialisé sous la référence 〈〈 SR 9003 〉〉 par la société CRAY-VALLEY
- (16): Commercialisé sous la référence 〈〈 CN 104 〉〉 par la société CRAY-VALLEY
- (17): Commercialisé sous la référence 〈〈 Trigonox T 〉〉 par la société AKZO
- (18): Commercialisé sous la référence 〈〈 Actilane 17 〉〉 par la société AKCROS
- (19): Commercialisé sous la référence 〈〈 HDDA 〉〉 par la société UNION CHIMIQUE BELGE

## Revendications

1. Procédé de production et de traitement de fils de verre ensimés selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, caractérisé en ce que l'on dépose à la surface des filaments en cours d'étirage et avant rassemblement des filaments en fils un ensimage apte à polymériser thermiquement, ledit ensimage étant constitué d'une solution dont la teneur en solvant est inférieure à 5 % en poids et la viscosité inférieure ou égale à 400 cP, ladite solution comprenant une structure de base polymérisable et/ou réticulable thermiquement, ladite structure comprenant au moins 60 % en poids d'un ou plusieurs composants de masse moléculaire inférieure à 750 présentant au moins une fonction acrylique et/ou méthacrylique et/ou vinyléther et/ou N vinylamide et/ou N vinyllactame, la proportion de composant(s) polyfonctionnel(s) au sein desdits composants étant au moins égale à 45 % en poids desdits composants, de façon à obtenir des fils de verre revêtus d'un ensimage non polymérisé susceptible de polymériser thermiquement.

2. Procédé selon la revendication 1, caractérisé en ce que la structure de base représente plus de 70 % en poids de l'ensimage déposé sur les filaments et, avantageusement, entre 80 et 100 % en poids dudit ensimage.

3. Procédé selon l'une des revendications 1 ou 2, caractérisé en ce que la structure de base polymérisable et/ou réticulable thermiquement comprend au moins un composant de masse moléculaire supérieure à 750.

4. Procédé selon l'une des revendications 1 à 3, caractérisé en ce que l'ensimage déposé sur les filaments comprend au moins un agent filmogène, la proportion d'agent(s) filmogène(s) au sein de l'ensimage n'excédant pas 10 % en poids.

5. Procédé selon l'une des revendications 1 à 4, caractérisé en ce que l'ensimage déposé sur les filaments comprend au moins un agent de couplage, la proportion d'agent(s) de couplage au sein de l'ensimage n'excédant pas 15 % en poids.

6. Procédé selon l'une des revendications 1 à 5, caractérisé en ce que l'ensimage déposé sur les filaments comprend au moins un agent textile lubrifiant, la proportion d'agent(s) textile(s) lubrifiant(s) au sein de l'ensimage n'excédant pas 8 % en poids.

7. Procédé selon l'une des revendications 1 à 6, caractérisé en ce que les fils sont collectés sous forme d'enroulements sur un support en rotation.

8. Procédé selon la revendication 7, caractérisé en ce que l'enroulement obtenu comprend moins de 5 % en poids d'ensimage.

9. Procédé selon la revendication 8, caractérisé en ce que l'angle de croisure des fils de l'enroulement est au moins égal à 1,5°.

10. Procédé selon l'une des revendications 1 à 8, caractérisé en ce que l'ensimage déposé sur les filaments comprend de 0,5 à 4 % en poids de peroxyde(s) organique(s).

11. Procédé selon la revendication 10, caractérisé en ce que l'ensimage déposé sur les filaments comprend au moins un agent stabilisant, la proportion d'agent(s) stabilisant(s) n'excédant pas 3 % en poids.

12. Procédé selon l'une des revendications 10 ou 11, caractérisé en ce que les fils obtenus sont soumis à l'action d'un traitement thermique après l'opération de collecte de manière à provoquer la polymérisation de l'ensimage.

13. Procédé selon l'une des revendications 1 à 11, caractérisé en ce que les fils ensimés collectés sont mis en contact avec une matière organique à renforcer avant soumission de l'ensemble à un traitement thermique visant à polymériser ou gélifier l'ensemble et à obtenir un composite.

14. Fils de verre tels que collectés selon le procédé défini dans les revendications 1 à 11, caractérisés en ce que les filaments qui les composent sont uniformément enduits de l'ensimage non polymérisé.

15. Fils de verre obtenus selon le procédé défini dans la revendication 12, caractérisés en ce que les filaments qui les composent sont uniformément enduits de l'ensimage polymérisé.

16. Fils de verre selon la revendication 15, caractérisés en ce que leur perte au feu est inférieure à 5 %.

17. Composite de matière organique renforcée par des fils de verre, caractérisé en ce qu'il contient des fils de verre tels que définis dans les revendications 15 ou 16.

18. Composite tel qu'obtenu selon le procédé de la revendication 13, caractérisé en ce qu'il est formé à partir de fils de verre tels que définis dans la revendication 14.

## Claims

1. Process for the manufacture and treatment of sized glass threads according to which a multiplicity of thin streams of molten glass, flowing from a multiplicity of orifices arranged at the base of one or more dies, are drawn in the form of one or more sheets of continuous filaments, then the filaments are gathered into one or more threads which are collected on a moving support, characterised in that a heat-polymerisable size is deposited on the surface of the filaments in the course of the drawing operation and before the filaments are gathered into threads, the size being constituted by a solution of which the solvent content is less than 5% by weight and the viscosity is less than or equal to 400 cP, the solution comprising a base structure which can be polymerised and/or cross-linked thermally, the structure comprising at least 60% by weight of one or more constituents that have a molecular mass lower than 750 and that have at least one acrylic and/or methacrylic and/or vinyl ether and/or N-vinylamide and/or N-vinyllactam function, the proportion of polyfunctional constituent(s) in the constituents being at least 45% by weight of the constituents, in order to obtain glass threads coated with a heat-polymerisable non-polymerised size.

2. Process according to claim 1, characterised in that the base structure represents more than 70% by weight of the size deposited on the filaments and, advantageously, between 80 and 100% by weight of the size.

3. Process according to either claim 1 or claim 2, characterised in that the base structure which can be polymerised and/or cross-linked thermally comprises at least one constituent having a molecular mass higher than 750.

4. Process according to any one of claims 1 to 3, characterised in that the size deposited on the filaments comprises at least one film-forming agent, the proportion of film-forming agent(s) in the size not exceeding 10% by weight.

5. Process according to any one of claims 1 to 4, characterised in that the size deposited on the filaments comprises at least one coupling agent, the proportion of coupling agent(s) in the size not exceeding 15% by weight.

6. Process according to any one of claims 1 to 5, characterised in that the size deposited on the filaments comprises at least one lubricating textile agent, the proportion of lubricating textile agent(s) in the size not exceeding 8% by weight.

7. Process according to any one of claims 1 to 6, characterised in that the threads are collected in the form of rolls on a rotating support.

8. Process according to claim 7, characterised in that the roll obtained comprises less than 5% by weight of size.

9. Process according to claim 8, characterised in that the angle of cross-over of the threads of the roll is at least 1.5°.

10. Process according to any one of claims 1 to 8, characterised in that the size deposited on the filaments comprises from 0.5 to 4% by weight of organic peroxide(s).

11. Process according to claim 10, characterised in that the size deposited on the filaments comprises at least one stabilising agent, the proportion of stabilising agent(s) not exceeding 3% by weight.

12. Process according to either claim 10 or claim 11, characterised in that the threads obtained are subjected to the action of a thermal treatment after the collecting operation in order to cause the size to polymerise.

13. Process according to any one of claims 1 to 11, characterised in that the collected sized threads are brought into contact with an organic material to be reinforced, before subjecting the whole to a thermal treatment aimed at polymerising or gelling the whole and at obtaining a composite.

14. Glass threads as collected according to the process defined in claims 1 to 11, characterised in that the filaments of which they are composed are uniformly coated with the non-polymerised size.

15. Glass threads obtained according to the process defined in claim 12, characterised in that the filaments of which they are composed are uniformly coated with the polymerised size.

16. Glass threads according to claim 15, characterised in that their loss on ignition is less than 5%.

17. Composite of organic material reinforced by glass threads, characterised in that it contains glass threads as defined in claims 15 and 16.

18. Composite as obtained according to the process of claim 13, characterised in that it is formed from glass threads as defined in claim 14.

## Patentansprüche

1. Verfahren zur Herstellung und Behandlung von mit einer Schlichte überzogenen Glasfäden, gemäß welchem eine Vielzahl von Strahlen aus geschmolzenem Glas, die aus einer Vielzahl von Öffnungen fließen, die am Boden einer oder mehrerer Spinndüsen angeordnet sind, zur Form einer oder mehrerer Bahnen aus endlosen Filamenten gezogen wird und anschließend die Filamente zu einem oder mehreren Fäden vereinigt werden, der/die auf einem sich bewegenden Träger zusammengefaßt wird/werden, **dadurch gekennzeichnet, daß** auf der Oberfläche der Filamente während des Ziehvorgangs und vor der Vereinigung der Filamente zu Fäden eine Schlichte aufgebracht wird, die thermisch polymerisiert werden kann und aus einer Lösung besteht, deren Lösungsmittelgehalt weniger als 5 Gew.-% beträgt, deren Viskosität kleiner oder gleich 400 cP ist und welche eine thermisch Polymerisierbare und/oder vernetzbare Grundstruktur umfaßt, die mindestens 60 Gew.-% eines Bestandteils oder mehrerer Bestandteile enthält, der/die eine Molmasse von unter 750 und mindestens eine funktionelle Acryl- und/oder Methacryl- und/oder Vinylether- und/oder N-Vinylamid- und/oder N-Vinyllactam-Gruppe aufweist/aufweisen, wobei der Ansteil von polyfunktionellem/polyfunktionellen Bestandteil/en an diesen Bestandteilen mindestens 45 Gew.-% davon derart beträgt, daß Glasfäden erhalten werden, welche mit einer unpolymerisierten Schlichte überzogen sind, die thermisch polymerisiert werden kann.

2. Verfahren nach Anspruch 1, **dadurch gekennzeichnet, daß** die Grundstruktur mehr als 70 Gew.-% und vorteilhafterweise zwischen 80 und 100 Gew.-% der Schlichte ausmacht, die auf den Filamenten aufgebracht worden ist.

3. Verfahren nach Anspruch 1 oder 2, **dadurch gekennzeichnet, daß** die thermisch polymerisierbare und/oder vernetzbare Grundstruktur mindestens einen Bestandteil mit einer Molmasse von über 750 enthält.

4. Verfahren nach einem der Ansprüche 1 bis 3, **dadurch gekennzeichnet, daß** die auf den Filamenten aufgebrachte Schlichte mindestens ein filmbildendes Mittel enthält, wobei der Anteil des/der filmbildenden Mittel/s an der Schlichte 10 Gew.-% nicht übersteigt.

5. Verfahren nach einem der Ansprüche 1 bis 4, **dadurch gekennzeichnet, daß** die auf den Filamenten aufgebrachte Schlichte mindestens ein Haftmittel enthält, wobei der Anteil des/der Haftmittel/s an der Schlichte 15 Gew.-% nicht übersteigt.

6. Verfahren nach einem der Ansprüche 1 bis 5, **dadurch gekennzeichnet, daß** die auf den Filamenten aufgebrachte Schlichte mindestens ein gleitfähig machendes Textilhilfsmittel enthält, wobei der Anteil des/der gleitfähig machenden Textilhilfsmittel/s an der Schlichte 8 Gew.-% nicht übersteigt.

7. Verfahren nach einem der Ansprüche 1 bis 6, **dadurch gekennzeichnet, daß** die Fäden in Form von Spulen auf einem sich drehenden Träger zusammengefaßt werden.

8. Verfahren nach Anspruch 7, **dadurch gekennzeichnet, daß** die erhaltene Spule weniger als 5 Gew.-% Schlichte enthält.

9. Verfahren nach Anspruch 8, **dadurch gekennzeichnet, daß** der Kreuzungswinkel der Fäden der Spule mindestens 1,5° beträgt.

10. Verfahren nach einem der Ansprüche 1 bis 8, **dadurch gekennzeichnet, daß** die auf den Filamenten aufgebrachte Schlichte 0,5 bis 4 Gew.-% organische/s Peroxid/e enthält.

11. Verfahren nach Anspruch 10, **dadurch gekennzeichnet, daß** die auf den Filamenten aufgebrachte Schlichte mindestens ein Stabilisierungsmittel enthält, wobei der Anteil des/der Stabilisierungsmittel/s 3 Gew.-% nicht übersteigt.

12. Verfahren nach Anspruch 10 oder 11, **dadurch gekennzeichnet, daß** die erhaltenen Fäden nach dem Zusammenfassen der Einwirkung einer Wärmebehandlung derart ausgesetzt werden, daß die Polymerisation der Schlichte einsetzt.

13. Verfahren nach einem der Ansprüche 1 bis 11, **dadurch gekennzeichnet, daß** die mit der Schlichte überzogenen, zusammengefaßten Fäden mit einem zu verstärkenden organischen Stoff in Berührung gebracht werden, bevor die Einheit einer Wärmebehandlung unterzogen wird, die darauf gerichtet ist, diese Einheit polymerisieren oder aushärten zu lassen und einen Verbundwerkstoff zu erhalten.

14. Glasfäden wie die gemäß dem in den Ansprüchen 1 bis 11 definierten Verfahren zusammengefaßten, **dadurch gekennzeichnet, daß** die sie bildenden Filamente gleichmäßig mit der unpolymerisierten Schlichte überzogen werden.

15. Glasfäden, welche gemäß dem in Anspruch 12 definierten Verfahren erhalten worden sind, **dadurch gekennzeichnet, daß** die sie bildenden Filamente gleichmäßig mit der polymerisierten Schlichte überzogen sind.

16. Glasfäden nach Anspruch 15, **dadurch gekennzeichnet, daß** ihr Glühverlust weniger als 5 % beträgt.

17. Verbundwerkstoff aus durch Glasfäden verstärktem organischem Material, **dadurch gekennzeichnet, daß** er Glasfäden wie die in Anspruch 15 oder 16 definierten enthält.

18. Verbundwerkstoff wie er gemäß dem Verfahren des Anspruchs 13 erhalten worden ist, **dadurch gekennzeichnet, daß** er ausgehend von Glasfäden wie sie im Anspruch 14 definiert sind, gebildet wird.
